# EUROPÄISCHE PATENTSCHRIFT

(11) **EP 2 403 800 B1**
(45) Veröffentlichungstag und Bekanntmachung des Hinweises auf die Patenterteilung: **24.12.2014**
(21) Anmeldenummer: 10714558.3
(22) Anmeldetag: 26.02.2010
(51) Int. Cl.: C01B 21/068, C01B 21/072, C01C 1/02

(54) **VERFAHREN ZUR HERSTELLUNG VON AMMONIAK**
METHOD FOR PRODUCING AMMONIA
PROCÉDÉ DE PRODUCTION D'AMMONIAC

(30) Priorität: 03.03.2009 DE 102009011311
(43) Veröffentlichungstag der Anmeldung: 11.01.2012
(73) Patentinhaber: Spawnt Private S.à.r.l., 1148 Luxembourg (LU)
(72) Erfinder: AUNER, Norbert, 61479 Glashütten (DE); PANDEY, Banibrata, Hyderabad-500016 (IN)
(74) Vertreter: Epping - Hermann - Fischer
(86) Internationale Anmeldenummer: PCT/DE2010/000218
(87) Internationale Veröffentlichungsnummer: WO 2010/099780

(56) Entgegenhaltungen:
- EP-A1- 1 452 578
- WO-A1-02/090255
- DE-A1- 10 039 752
- GB-A- 199 667
- US-A- 5 378 666
- US-A- 5 607 297

## Beschreibung

Die vorliegende Erfindung betrifft ein Verfahren zur Herstellung von Ammoniak.

Es gibt eine Vielzahl von Verfahren zur Herstellung von Ammoniak, von denen das Haber-Bosch-Verfahren am bekanntesten ist. Des Weiteren ist das sogenannte Serpek-Verfahren bekannt, das die Hydrolyse von Nitriden betrifft (2AlN+3H₂O→Al₂O₃+2NH₃). Eines der wichtigsten Nitride ist Siliciumnitrid (Si₃N₄): Die Siliciumnitrid-Darstellung aus SiO₂-Quellen durch Carbonitridierung ist bekannt. Hierbei wird Silicumdioxid durch Zusatz einer Kohlenstoffquelle mit gasförmigem Stickstoff bei erhöhter Temperatur umgesetzt.

GB 199,667 A betrifft ein Verfahren zur Spaltung von aluminiumhaltigen Substanzen wie Bauxit, Ton oder dergleichen in Kombination mit der Fixierung von Stickstoff. Aluminiumoxid wird zusammen mit Kohle und geringen Mengen an Erdalkali bei hohen Temperaturen unter Bildung von Nitriden. Das stickstoffhaltige Produkt, das Erdalkalimetall, Aluminium, Eisen, Silizium, Kohlenstoff, Stickstoffoxide, und manchmal Titan enthält, wird zum Auslaugen von Aluminium in der Form eines Aluminats behandelt. Der Stickstoff kann in Form von Ammoniak mit Wasser oder mit einer Lösung aus Alkalisulfat, Alkalicarbonat, Alkalihydroxid oder dergleichen ausgetrieben werden.

EP 1 452 578 A1 offenbart, dass bei der Vergasung von Biomasse die Menge an Stickstoff in der Vergaserluft durch Zugabe von Siliciumpulver verringert werden kann, wobei Siliziumnitrid gebildet wird.

DE 10039752 A1, welche als nächstliegender Stand der Technik herangezogen wird, offenbart ein Verfahren zur Herstellung von Ammoniakgas umfassend die Umsetzung von elementarem Silicium oder Siliciumverbindungen mit Stickstoff in Gegenwart eines Katalysators zur Herstellung von Siliciumnitrid und Umsetzung des Siliciumnitrids mit einer starken Base oder ihrer wässrigen Lösung unter Herstellung von Silikaten.

US 5,378,666 offenbart ein Verfahren zur Herstellung von Siliciumnitrid umfassend Herstellung einer Primärreaktionsmischung einschließlich Siliciumdioxid und Kohlenstoff, Einbauen der Primärreaktionsmischung in ein kohlenstoffbasiertes Komposit-Matrixmaterial, und dann Carbonitridieren des Komposits.

US 5,607,297 offenbart ein Verfahren zum Carbonitridieren Siliciumdioxid in einem carbothermischen Bettreaktor.

Der vorliegenden Erfindung liegt die Aufgabe zugrunde, ein Verfahren zur Herstellung von Ammoniak zur Verfügung zu stellen, das eine besonders effektive Ausnutzung von natürlichen Ressourcen ermöglicht.

Diese Aufgabe wird erfindungsgemäß durch ein Verfahren zur Herstellung von Ammoniak nach Anspruch 1 gelöst.

Bevorzugte Ausführungsformen werden in den abhängigen Patentansprüchen dargestellt.

Bei dem erfindungsgemäßen Verfahren handelt es sich um ein Zweistufenverfahren, bei dem in einer ersten Stufe Siliciumnitrid und in einer zweiten Stufe aus dem Siliciumnitrid Ammoniak hergestellt wird. Die Umsetzung des Siliciumnitrides oder Siliciumnitrid--haltigen Materiales erfolgt in Gegenwart einer basischen Alkali- und/oder Erdkalimetallverbindung mit Wasser. Da die für die Gewinnung von Siliciumnitrid erforderlichen Substanzen (SiO₂ oder SiO₂- haltiges Material, Kohlenstoffquelle, gasförmiger Stickstoff) als auch die für die Gewinnung von Ammoniak benötigten Substanzen (basische Alkali- und/oder Erdalkalimetallverbindung, Wasser) als natürliche billige Ressourcen zur Verfügung stehen, lässt sich das erfindungsgemäße Verfahren einfach und kostengünstig realisieren. Da ferner für das Verfahren keine erhöhten Drücke, sondern lediglich erhöhte Temperaturen erforderlich sind, lässt sich das Verfahren auch von der verfahrenstechnischen Seite her relativ einfach und kostengünstig durchführen.

Als Ausgangsprodukt für das erfindungsgemäße Verfahren kommt SiO₂ oder SiO₂- -haltiges Material infrage, insbesondere in der Form von Sand (Quarzsand), Silikaten, Alumosilikaten, Tonen, Bauxit etc. Dabei ist es nicht erforderlich, dass reines Ausgangsmaterial verwendet wird, sondern dieses Material kann auch entsprechende Verunreinigungen bzw. Zusätze aufweisen, wenn es nur SiO₂- -haltig bzw. Silikat-haltig ist. Aufwendige Reinigungsmaßnahmen können daher beim erfindungsgemäßen Verfahren entfallen.

Als Kohlenstoffquelle können die üblichen Substanzen Verwendung finden.

Ein weiterer Vorteil des erfindungsgemäßen Verfahrens besteht darin, dass kein reines Siliciumnitrid hergestellt werden muss, sondern es für die Gewinnung von Ammoniak ausreichend ist, Siliciumnitrid-haltiges Material zu erzeugen, so dass, wie erwähnt, aufwendige Reinigungsmaßnahmen des Ausgangsmateriales bzw. der Ausgangsmaterialien entfallen können.

Für das erfindungsgemäße Verfahren ist es wesentlich, dass die Umsetzung des erhaltenen Siliciumnitrides oder Siliciumnitrid-haltigen Materiales mit Wasser (Wasserdampf) in Gegenwart einer basischen Alkali- und/oder Erdalkalimetallverbindung stattfindet. Diese basische Alkali- und/oder Erdalkalimetallverbindung kann dem Siliciumnitrid oder Siliciumnitrid-haltigen Material vor der Zugabe von Wasser zugesetzt werden. Es kann auch als Quelle hierfür eine derartige Verbindung zugesetzt werden, die bei der entsprechenden Prozesstemperatur eine basische Alkali- und/oder Erdalkalimetallverbindung freisetzt. In jedem Fall muss die Umsetzung mit Wasser im basischen Milieu ablaufen.

Bei einer anderen Ausführungsform des erfindungsgemäßen Verfahrens wird ein SiO₂- haltiges Material verwendet, das bereits eine basische Alkali- und/oder Erdalkalimetallverbindung oder eine Quelle hierfür enthält. Bei dieser Verfahrensvariante wird daher keine basische Alkali- und/oder Erdalkalimetallverbindung oder eine Quelle hierfür zugesetzt, sondern das verwendete Ausgangsmaterial enthält bereits eine solche Verbindung oder eine Quelle hierfür. Dies kann beispielsweise durch Verwendung eines solchen SiO₂- haltigen Materiales verwirklicht werden, das solche Bestandteile oder Verunreinigungen enthält, die bei der entsprechenden Prozesstemperatur eine basische Alkali- und/oder Erdalkalimetallverbindung freisetzen.

Bei noch einer anderen Variante des erfindungsgemäßen Verfahrens wird von Anfang an zusätzlich zu SiO₂ oder SiO₂- haltigem Material als Ausgangsmaterial eine basische Alkali- und/oder Erdalkalimetallverbindung oder eine Quelle hierfür verwendet. Bei dieser Variante wird somit ein Ausgangsmaterialgemisch eingesetzt, das sowohl SiO₂ oder SiO₂-haltiges Material als auch eine basische Alkali- und/oder Erdalkalimetallverbindung oder eine Quelle hierfür enthält. Auch in diesem Fall setzt dann die Quelle für die basische Alkali- und/oder Erdalkalimetallverbindung bei der entsprechenden Prozesstemperatur die basische Alkali- und/oder Erdalkalimetallverbindung frei.

Ein wesentlicher Vorteil des erfindungsgemäßen Verfahrens besteht darin, dass es als Kreisprozess durchgeführt wird. Hierbei werden die als Endprodukt erhaltenen Alkali- und/oder Erdalkalimetallsilikate wieder als Ausgangsprodukt, d.h. als SiO₂- haltiges Material, eingesetzt. Je nachdem, ob die erhaltenen Alkali- und/oder Erdalkalimetallsilikate und/oder -aluminate noch eine Quelle für eine basische Alkali- und/oder Erdalkalimetallverbindung enthalten, muss dann keine neue basische Alkali- und/oder Erdalkalimetallverbindung oder eine entsprechende Quelle hierfür mehr zugesetzt werden. Es ist klar, dass diese Verfahrensvariante den Vorteil hat, dass das bei der Gewinnung von Ammoniak erhaltene Alkali- und/oder Erdalkalimetallsilikat- und/oder -aluminatmaterial gezielt wieder als Ausgangsprodukt eingesetzt werden kann, so dass eine besonders effektive Verwertung der für das erfindungsgemäße Verfahren verwendeten Produkte stattfindet. Das benötigte SiO₂ oder SiO₂- haltige Material muss daher lediglich ergänzt werden. Es wird daher erfindungsgemäß die Gewinnung von Ammoniak aus SiO₂ oder aus SiO₂- haltigem Material im Kreisprozess realisiert.

Vorzugsweise werden als basische Alkali- und/oder Erdalkalimetallverbindung Oxide, Hydroxide und/oder Carbonate verwendet. Als Quelle für eine derartige Verbindung wird daher vorzugsweise eine solche eingesetzt, die entsprechende Oxide, Hydroxide und/oder Carbonate freisetzt.

Wie bereits erwähnt, finden bei dem erfindungsgemäßen Verfahren in beiden Verfahrensschritten erhöhte Temperaturen Verwendung, so dass Wärmeenergie zugeführt werden muss. Dies kann auf herkömmliche Weise geschehen. Bei einer besonders bevorzugten Variante des erfindungsgemäßen Verfahrens wird die erhöhte Temperatur im ersten und/oder zweiten Verfahrensschritt jedoch durch Mikrowellenenergie erzeugt. Dies stellt eine besonders effektive Art und Weise dar, die entsprechenden Reaktionstemperaturen zu erreichen, um insbesondere durch Lichtbögen am C-Zentrum im ersten Schritt des erfindungsgemäßen Verfahrens die erforderliche reaktive Form von N₂ zu gewinnen.

Insbesondere wird die Reaktion zur Gewinnung von Siliciumnitrid oder Siliciumnitridhaltigem Material vorzugsweise bei einer Temperatur von 1.100-2.000 °C, bevorzugt 1.250-1.500 °C, durchgeführt. Die Reaktion zur Gewinnung von Ammoniak wird vorzugsweise bei einer Temperatur von 200-1.000 °C, vorzugsweise 400-800 °C, durchgeführt.

Es wurde bereits vorstehend darauf hingewiesen, dass dann, wenn im Ausgangsmaterial für die thermische Nitriddarstellung bereits eine oder mehrere Quellen für basische Alkali- und/oder Erdalkalimetallverbindungen, insbesondere Alkali/Erdalkalimetalloxide, enthalten sind, das gewonnene Nitrid bereits mit basischem Material angereichert ist, so dass auf die weitere Zugabe von basischem Material verzichtet werden kann. Eine Umsetzung mit Wasserdampf bei erhöhten Temperaturen reicht dann zur Freisetzung von Ammoniak aus.

Das Produkt der Ammoniaksynthese, d.h. die erhaltenen Alkali- und/oder Erdalkalimetallsilikate, kann nach Zugabe weiteren Kohlenstoffes direkt wieder zur Nitridbildung geeignet sein, falls es noch entsprechendes basisches Material enthält. Eine weitere Zugabe von basischem Material ist dann überflüssig.

Als Siliciumdioxid-haltige Ausgangsmaterialien zur Durchführung des erfindungsgemäßen Verfahrens sind auch solche geeignet, die Aluminium enthalten, wie Alumosilikate und Tonerden. Die Nitridherstellung führt dann zu Siliciumnitrid, das mit Aluminiumnitrid verunreinigt ist.

Das gewonnene Siliciumnitrid kann auch beispielsweise in Form von Siliciumoxynitrid vorliegen.

Als Ausgangsmaterialien für das erfindungsgemäße Verfahren finden vorzugsweise neben SiO₂ in der Form von Sand, insbesondere Quarzsand, Alkali- und/oder Erdalkalimetallsilikate enthaltende Mineralien, auch Alumosilikate, Verwendung. Diese Materialien haben den Vorteil, dass hierdurch automatisch die basischen Alkali- und/oder Erdalkalimetallverbindungen (Oxide, Hydroxide etc.) für den Prozess zur Verfügung gestellt werden können, ohne dass diese Materialien später zugesetzt werden müssen. Man kann daher bei den verwendeten Ausgangsmaterialien beispielsweise auf umfangreiche Reinigungsmaßnahmen verzichten, da derartige Silikat- haltige Materialien als Ausgangsmaterial erwünscht sind und nicht unbedingt reines SiO₂ verwendet werden muss.

Bei einer weiteren Ausführungsform des erfindungsgemäßen Verfahrens wird die Kohlenstoffquelle durch Pyrolyse von Biomasse gewonnen.

Es hat sich gezeigt, dass sich durch die Pyrolyse von Biomasse die für die Reduktion von SiO₂ benötigte Kohlenstoffquelle in einfacher und ausreichender Weise zur Verfügung stellen lässt, wobei sich das Pyrolyseverfahren entsprechend so steuern lässt, dass die benötigte Kohlenstoffquelle zur Verfügung gestellt wird, ohne dass zusätzlich Kohlenstoff aus fossilen Quellen bereitgestellt werden muss. Es wird daher so vorgegangen, dass Kohlenstoff im Überschuss erzeugt wird. Eine Abreaktion des erhaltenen Kohlenstoffs, beispielsweise durch Zuführung von zusätzlichem Wasserdampf, wird daher vorzugsweise erfindungsgemäß vermieden, da eine hohe Ausbeute an Kohlenstoff erwünscht wird.

Bei der durchgeführten Pyrolyse der Biomasse entstehen Wasserstoff (H₂), Kohlenmonoxid (CO) und mehr oder weniger reiner Kohlenstoff in der Form von Holzkohle, verkohltem Material etc. Die letztgenannten Substanzen können entsprechend gereinigt (aktiviert) werden und werden dann im nachfolgenden ersten Verfahrensschritt des Verfahrens zur Herstellung von Ammoniak eingesetzt, um SiO₂ oder SiO₂ haltiges Material zu reduzieren.

Bei dem erfindungsgemäßen Verfahren wird die Pyrolyse der Biomasse vorzugsweise bei Temperaturen ≥800°C durchgeführt. Das entsprechende Verfahren entspricht -ähnlich der konventionellen Kohlevergasung- der Synthesegasherstellung, wobei als Endprodukte Synthesegas (H₂, CO) und eine entsprechende Kohlenstoffquelle erhalten werden. Da die verwendete Biomasse in der Regel unterschiedliche Konzentrationen an Wasser, zum Teil als freie Flüssigkeit, teilweise aber auch in organischen Molekülen gebunden, wie beispielsweise als Zellulose, enthält, wird die Biomasse vorzugsweise vor der Pyrolyse getrocknet.

Bei der Synthesegasgewinnung wird üblicherweise getrocknete Biomasse unter Zuführung von zusätzlichem Wasserdampf erhitzt, um den erhaltenen Kohlenstoff abzureagieren. Erfindungsgemäß wird die Pyrolyse vorzugsweise ohne Zusatz von Wasserdampf durchgeführt, um die für das nachfolgende Verfahren zur Herstellung von Ammoniak benötigte Kohlenstoffquelle in ausreichender Menge (im Überschuss) zu erhalten.

Das bei der Pyrolyse erhaltene Synthesegas (H₂, CO) wird zweckmäßigerweise zur Gewinnung von Wärmeenergie verbrannt, die zur Erzeugung der erhöhten Temperaturen beim ersten und/oder zweiten Verfahrensschritt des erfindungsgemäßen Verfahrens eingesetzt wird. Das dabei entstehende CO₂ kann aufgefangen und beispielsweise für die Weiterverarbeitung des hergestellten Ammoniaks eingesetzt werden.

Das erfindungsgemäße Verfahren weist daher eine günstige Energiebilanz auf, da ein Teil der benötigten Energie (für die Pyrolyse der Biomasse und für den ersten und zweiten Schritt des erfindungsgemäßen Verfahrens) durch die Verbrennung des bei der Pyrolyse gewonnenen Synthesegases zur Verfügung gestellt werden kann.

In Weiterbildung des erfindungsgemäßen Verfahrens wird die durch die Pyrolyse von Biomasse gewonnene Kohlenstoffquelle den bei der Ammoniakerzeugung erhaltenen Alkali- und/oder Erdalkalimetallsilikaten zugesetzt, um hieraus Nitrid zu erzeugen. Dies wird dann durchgeführt, wenn die erhaltenen Alkali- und/oder Erdalkalimetallsilikate/aluminate noch entsprechendes basisches Material enthalten.

### Ausführungsbeispiel

Quarzsand wurde unter Zusatz von Kohlenstoff und gasförmigem Stickstoff bei einer Temperatur von 1.300 °C zu Siliciumnitrid umgesetzt. Nach Zugabe von Na₂CO₃ wurde das gewonnene Siliciumnitrid bei 800 °C mit Wasserdampf zu Ammoniak umgesetzt. Dabei wurde eine 85%ige NH₃-Ausbeute erzielt.

## Patentansprüche

1. Verfahren zur Herstellung von Ammoniak durch Umsetzung von SiO₂ oder SiO₂- haltigem Material unter Zusatz einer Kohlenstoffquelle mit gasförmigem Stickstoff bei erhöhter Temperatur zur Gewinnung von Siliciumnitrid (Si₃N₄), oder Siliciumnitrid-haltigem Material und Umsetzung des erhaltenen Siliciumnitrides oder Silicumnitrid- haltigen Materiales in Gegenwart einer basischen Alkali- und/oder Erdalkalimetallverbindung mit Wasser bei erhöhter Temperatur zu Ammoniak und Alkaliund/oder Erdalkalimetallsilikaten, wobei das Verfahren als Kreisprozess durchgeführt wird und die erhaltenen Alkali- und/oder Erdalkalimetallsilikate wieder als SiO₂- haltiges Ausgangsmaterial verwendet werden.

2. Verfahren nach Anspruch 1, **dadurch gekennzeichnet, dass** die basische Alkali- und/oder Erdalkalimetallverbindung oder eine Quelle hierfür dem Siliciumnitrid oder Siliciumnitrid- haltigen Material vor der Zugabe von Wasser zugesetzt wird.

3. Verfahren nach Anspruch 1, **dadurch gekennzeichnet, dass** ein SiO₂- haltiges Material verwendet wird, das bereits eine basische Alkali- und/oder Erdalkalimetallverbindung oder eine Quelle hierfür enthält.

4. Verfahren nach einem der vorangehenden Ansprüche, **dadurch gekennzeichnet, dass** zusätzlich zu SiO₂ oder SiO₂- haltigem Material als Ausgangsmaterial eine basische Alkali- und/oder Erdalkalimetallverbindung oder eine Quelle hierfür verwendet wird.

5. Verfahren nach einem der vorangehenden Ansprüche, **dadurch gekennzeichnet, dass** eine basische Alkaliund/oder Erdalkalimetallverbindung von einer entsprechenden Quelle bei den Prozessbedingungen freigesetzt wird.

6. Verfahren nach einem der vorangehenden Ansprüche, **dadurch gekennzeichnet, dass** als basische Alkaliund/oder Erdalkalimetallverbindung Oxide, Hydroxide und/oder Carbonate verwendet oder erzeugt werden.

7. Verfahren nach einem der vorangehenden Ansprüche, **dadurch gekennzeichnet, dass** die Reaktion zur Gewinnung von Siliciumnitrid oder Siliciumnitrid- haltigem Material bei einer Temperatur von 1.100- 2.000°C, bevorzugt 1.250-1.500°C, durchgeführt wird.

8. Verfahren nach einem der vorangehenden Ansprüche, **dadurch gekennzeichnet, dass** die Reaktion zur Gewinnung von Ammoniak aus Siliciumnitrid oder Siliciumnitrid-haltigem Material Material bei einer Temperatur von 200-1.000°C, vorzugsweise 400-800°C, durchgeführt wird.

9. Verfahren nach einem der vorangehenden Ansprüche, **dadurch gekennzeichnet, dass** die erhöhte Temperatur im ersten und/oder zweiten Verfahrensschritt durch Mikrowellenenergie erzeugt wird.

10. Verfahren nach einem der vorhergehenden Ansprüche, **dadurch gekennzeichnet, dass** die Kohlenstoffquelle durch Pyrolyse von Biomasse erhalten wird.

11. Verfahren nach Anspruch 10, **dadurch gekennzeichnet, dass** die Pyrolyse bei Temperaturen ≥ 800°C durchgeführt wird.

12. Verfahren nach Anspruch 10 oder 11, gekennzeichnet, dass die Biomasse vor der Pyrolyse getrocknet wird.

13. Verfahren nach einem der Ansprüche 10 bis 12, **dadurch gekennzeichnet, dass** man die Pyrolyse ohne Zugabe von Wasserdampf durchgeführt.

14. Verfahren nach einem der Ansprüche 10 bis 13, gekennzeichnet, dass das bei der Pyrolyse erhaltene Synthesegas (H₂, CO) zur Gewinnung von Wärmeenergie verbrannt wird, die zur Erzeugung der erhöhten Temperaturen bei einem ersten und / oder zweiten Verfahrensschritt eingesetzt wird.

15. Verfahren nach einem der Ansprüche 10 bis 14, **dadurch gekennzeichnet, dass** die durch die Pyrolyse von Biomasse gewonnene Kohlenstoffquelle den bei der Ammoniakerzeugung erhaltenen Alkali- und / oder Erdalkalimetallsilikaten zugesetzt wird, um hieraus Nitrid zu erzeugen.

## Claims

1. Method for producing ammonia by reacting SiO₂ or material containing SiO₂, with addition of a carbon source, with gaseous nitrogen at elevated temperature to give silicon nitride (Si₃N₄) or material containing silicon nitride, and reacting the resultant silicon nitride or material containing silicon nitride, in the presence of a basic alkali metal compound and/or alkaline earth metal compound, with water at elevated temperature to give ammonia and alkali metal silicates and/or alkaline earth metal silicates, wherein the method is carried out as a circulation operation and the resultant alkali metal silicates and/or alkaline earth metal silicates are used again as starting material containing SiO₂.

2. Method according to Claim 1, **characterized in that** the basic alkali metal compound and/or alkaline earth metal compound or a source thereof is added to the silicon nitride or material containing silicon nitride before the addition of water.

3. Method according to Claim 1, **characterized in that** a material containing SiO₂ is used which already comprises a basic alkali metal compound and/or alkaline earth metal compound or a source thereof.

4. Method according to any of the preceding claims, **characterized in that**, in addition to SiO₂ or material containing SiO₂, as starting material, a basic alkali metal compound and/or alkaline earth metal compound or a source thereof is used.

5. Method according to any of the preceding claims, **characterized in that** a basic alkali metal compound and/or alkaline earth metal compound is liberated from a corresponding source under the operational conditions.

6. Method according to any of the preceding claims, **characterized in that** oxides, hydroxides and/or carbonates are used or generated as basic alkali metal compound and/or alkaline earth metal compound.

7. Method according to any of the preceding claims, **characterized in that** the reaction to give silicon nitride or material containing silicon nitride is carried out at a temperature of 1100-2000°C, preferably 1250-1500°C.

8. Method according to any of the preceding claims, **characterized in that** the reaction to give ammonia from silicon nitride or material containing silicon nitride is carried out at a temperature of 200-1000°C, preferably 400-800°C.

9. Method according to any of the preceding claims, **characterized in that** the elevated temperature in the first and/or second method step is generated by microwave energy.

10. Method according to any of the preceding claims, **characterized in that** the carbon source is obtained by pyrolysis of biomass.

11. Method according to Claim 10, **characterized in that** the pyrolysis is carried out at temperatures ≥ 800°C.

12. Method according to Claim 10 or 11, **characterized in that** the biomass is dried before the pyrolysis.

13. Method according to any of Claims 10 to 12, **characterized in that** the pyrolysis is carried out without addition of steam.

14. Method according to any of Claims 10 to 13, **characterized in that** the synthesis gas (H₂, CO) obtained in the pyrolysis is burnt to obtain thermal energy which is used to generate the elevated temperatures in a first and/or second method step.

15. Method according to any of Claims 10 to 14, **characterized in that** the carbon source obtained by the pyrolysis of biomass is added to the alkali metal silicates and/or alkaline earth metal silicates obtained in the ammonia generation, for the generation of nitride therefrom.

## Revendications

1. Procédé de fabrication d'ammoniac par mise en réaction de SiO₂ ou d'un matériau contenant SiO₂, avec ajout d'une source de carbone, avec de l'azote gazeux à température élevée pour obtenir du nitrure de silicium (Si₃N₄) ou un matériau contenant du nitrure de silicium, et mise en réaction du nitrure de silicium ou du matériau contenant du nitrure de silicium obtenu en présence d'un composé basique de métal alcalin et/ou alcalino-terreux avec de l'eau à température élevée pour former de l'ammoniac et des silicates de métaux alcalins et/ou alcalino-terreux, le procédé étant réalisé sous la forme d'un procédé circulaire et les silicates de métaux alcalins et/ou alcalino-terreux obtenus étant réutilisés en tant que matière première contenant SiO₂.

2. Procédé selon la revendication 1, **caractérisé en ce que** le composé basique de métal alcalin et/ou alcalino-terreux ou une source de celui-ci est ajouté au nitrure de silicium ou au matériau contenant du nitrure de silicium avant l'ajout d'eau.

3. Procédé selon la revendication 1, **caractérisé en ce qu'**un matériau contenant SiO₂ qui contient déjà un composé basique de métal alcalin et/ou alcalino-terreux ou une source de celui-ci est utilisé.

4. Procédé selon l'une quelconque des revendications précédentes, **caractérisé en ce qu'**un composé basique de métal alcalin et/ou alcalino-terreux ou une source de celui-ci est utilisé en plus du SiO₂ ou matériau contenant SiO₂ en tant que matière première.

5. Procédé selon l'une quelconque des revendications précédentes, **caractérisé en ce qu'**un composé basique de métal alcalin et/ou alcalino-terreux est libéré à partir d'une source appropriée dans les conditions du procédé.

6. Procédé selon l'une quelconque des revendications précédentes, **caractérisé en ce que** des oxydes, hydroxydes et/ou carbonates sont utilisés ou formés en tant que composé basique de métal alcalin et/ou alcalino-terreux.

7. Procédé selon l'une quelconque des revendications précédentes, **caractérisé en ce que** la réaction pour l'obtention de nitrure de silicium ou d'un matériau contenant du nitrure de silicium est réalisée à une température de 1 100 à 2 000 °C, de préférence de 1 250 à 1 500 °C.

8. Procédé selon l'une quelconque des revendications précédentes, **caractérisé en ce que** la réaction pour l'obtention d'ammoniac à partir de nitrure de silicium ou d'un matériau contenant du nitrure de silicium est réalisée à une température de 200 à 1 000 °C, de préférence de 400 à 800 °C.

9. Procédé selon l'une quelconque des revendications précédentes, **caractérisé en ce que** la température élevée lors de la première et/ou seconde étape de procédé est générée par une énergie micro-onde.

10. Procédé selon l'une quelconque des revendications précédentes, **caractérisé en ce que** la source de carbone est obtenue par pyrolyse d'une biomasse.

11. Procédé selon la revendication 10, **caractérisé en ce que** la pyrolyse est réalisée à des températures ≥ 800 °C.

12. Procédé selon la revendication 10 ou 11, **caractérisé en ce que** la biomasse est séchée avant la pyrolyse.

13. Procédé selon l'une quelconque des revendications 10 à 12, **caractérisé en ce que** la pyrolyse est réalisée sans ajout de vapeur d'eau.

14. Procédé selon l'une quelconque des revendications 10 à 13, **caractérisé en ce que** le gaz de synthèse (H₂, CO) obtenu lors de la pyrolyse est brûlé pour l'obtention d'énergie thermique, qui est utilisée pour la génération des températures élevées lors de la première et/ou seconde étape de procédé.

15. Procédé selon l'une quelconque des revendications 10 à 14, **caractérisé en ce que** la source de carbone obtenue par la pyrolyse d'une biomasse est ajoutée aux silicates de métaux alcalins et/ou alcalino-terreux obtenus lors de la génération d'ammoniac, afin de former un nitrure à partir de ceux-ci.
